# FASCICULE DE BREVET EUROPEEN

(11) **EP 1 778 999 B1**
(45) Date de publication et mention de la délivrance du brevet: **09.06.2010**
(21) Numéro de dépôt: 05795000.8
(22) Date de dépôt: 27.07.2005
(51) Int. Cl.: F16F 15/131

(54) **EMBRAYAGE, NOTAMMENT POUR VEHICULE AUTOMOBILE, COMPORTANT UN ORGANE PERFECTIONNE DE LIAISON A UN ORGANE MENANT**
KUPPLUNG, INSBESONDERE FÜR EIN KRAFTFAHRZEUG, WELCHES MIT EINEM VERBESSERTEN ELEMENT ZUR VERBINDUNG MIT EINEM ANTRIEBSELEMENT AUSGESTATTET IST
CLUTCH, IN PARTICULAR FOR A MOTOR VEHICLE PROVIDED WITH AN IMPROVED MEMBER FOR CONNECTING TO A DRIVE MEMBER

(30) Priorité: 28.07.2004 FR 0451682
(43) Date de publication de la demande: 02.05.2007
(73) Titulaire: Valeo Embrayages, 80009 Amiens Cedex 1 (FR)
(72) Inventeur: TERMENON, Norberto, F-80000 AMIENS (FR)
(74) Mandataire: Lemaire, Marc
(86) Numéro de dépôt international: PCT/FR2005/050624
(87) Numéro de publication internationale: WO 2006/018583

(56) Documents cités:
- EP-A- 0 803 661
- DE-A1- 19 840 217
- FR-A- 1 021 778
- US-A- 5 323 665

## Description

La présente invention concerne un embrayage, notamment pour véhicule automobile, comportant un organe perfectionné de liaison à un organe menant

L'invention concerne plus particulièrement un embrayage de type double, mais peut être également appliquée à un embrayage de type simple.

Dans un véhicule automobile, un double embrayage permet habituellement de coupler alternativement un organe rotatif menant avec deux organes rotatifs menés. Ces organes menant et menés ont des axes de rotation sensiblement alignés. En général, l'organe rotatif menant est coupé au moteur, plus particulièrement à un vilebrequin du moteur, et les organes rotatifs menés sont respectivement couplés à deux arbres coaxiaux d'entrée d'une boîte de vitesses, dite boîte de vitesses à double embrayage.

Ainsi, un double embrayage permet de changer de rapport de vitesses tout en maintenant la transmission d'un couple moteur aux roues du véhicule. En effet, un double embrayage comporte habituellement un couvercle, monté sur un volant d'inertie, dans lequel sont logés des premier et second embrayages associés respectivement à des rapports de vitesses pairs et impairs.

En général, le volant d'inertie est lié au vilebrequin du moteur. Dans ce cas, les premier et second embrayages comportent chacun un dispositif d'amortissement des vibrations en rotation générées par le moteur. Eh variante, le vilebrequin peut porter un premier volant d'inertie, dit volant primaire, lié en rotation, par l'intermédiaire d'un dispositif d'amortissement de vibrations, à un second volant d'inertie, dit volant secondaire, portant le double embrayage.

Lors d'un changement de rapport de vitesses, un premier embrayage est débrayé alors que le second embrayage est embrayé, si bien que le couple moteur est transféré progressivement du premier au second embrayage. Ainsi, la somme des couples transmis par les premier et second embrayages est toujours sensiblement égale au couple moteur.

Chaque embrayage comprend un mécanisme comportant un diaphragme destiné à coopérer avec un plateau de pression solidaire en rotation du couvercle et du volant d'inertie. En général, le diaphragme comporte une partie formant rondelle Belleville, grâce à laquelle le diaphragme coopère avec le plateau de pression comme un levier de serrage. Le diaphragme est déplaçable, au moyen d'une butée de commande correspondante, entre une position de repos et une position active.

Chaque plateau de pression, sollicité par le diaphragme correspondant, est destiné à enserrer un disque de friction entre ce plateau de pression et un plateau de réaction correspondant. Le disque de friction est lié en rotation à un arbre correspondant de la boîte de vitesses et le plateau de réaction est solidaire en rotation du couvercle et de l'arbre moteur. Ainsi, le serrage d'un disque de friction entre les plateaux de pression et de réaction correspondants permet la transmission d'un couple entre l'arbre moteur et l'arbre de boîte de vitesses associé.

En général, pour un embrayage de type double, le couvercle est lié à un carter de boîte de vitesses au moyen d'un roulement formant palier, agencé entre ce couvercle et ce carter de boîte de vitesses. Ce roulement formant palier assure un centrage du double embrayage par rapport à l'axe des arbres d'entrée de la boîte de vitesses.

Le roulement assure en outre le positionnement axial du double embrayage par rapport au carter de boîte de vitesses, ainsi que la solidarisation axiale de ce double embrayage sur ce carter de boîte de vitesses. Cette solidarisation axiale permet de renvoyer l'effort axial exercé par les butées de commande sur les diaphragmes du double embrayage vers le carter de boîte de vitesses, afin d'éviter la transmission de cet effort au vilebrequin du moteur.

On notera que le positionnement axial du double embrayage étant assuré par rapport au carter de boîte de vitesses, son positionnement par rapport au vilebrequin présente une certaine imprécision due aux dispersions de cotes axiales des différents éléments empilés lors d'une fabrication en série d'un double embrayage. De plus, les efforts qui s'exercent dans le double embrayage lors de son fonctionnement entraînent une déformation élastique des composants susceptible de modifier les cotes axiales,

Par ailleurs, l'axe de rotation du double embrayage peut présenter un défaut d'alignement par rapport à l'axe de rotation du vilebrequin.

Ces défauts et dispersions, qui sont en général plus conséquents dans un double embrayage que dans un simple embrayage, sont susceptibles d'engendrer des efforts indésirables dans le vilebrequin du moteur, notamment dans la direction axiale.

Pour limiter les effets indésirables des défauts d'alignement et des dispersions de cotes axiales, on a déjà proposé dans l'état de la technique, notamment dans FR-A-2 830 585, un embrayage, notamment pour véhicule automobile, du type comprenant un volant d'inertie et un organe de liaison destiné à relier le volant d'inertie à un organe menant, l'organe de liaison ayant une forme générale de révolution autour d'un axe de révolution et étant déformable élastiquement axialement.

Cet organe de liaison est susceptible de se déformer pour limiter les effets des défauts d'alignement et des dispersions de cotes axiales des différents éléments de l'embrayage tout en assurant une transmission de couple entre l'organe menant et le volant d'inertie.

On notera que dans un embrayage du type décrit dans FR-A-2 830 585, l'essentiel des efforts axiaux relativement importants exercés par chaque butée de commande sur la mécanisme correspondant sont généralement transmis, via un palier de renvoi d'effort, au carter de boîte de vitesse, si bien que l'organe de liaison déformable axialement n'est pas soumis à des efforts axiaux excessifs.

On constate que dans certains types d'embrayages, notamment des doubles embrayages, l'organe de liaison classique reliant l'organe menant au volant d'inertie ne limite pas suffisamment les efforts axiaux indésirables transmis au vilebrequin. Par ailleurs, la solution présentée dans FR-A-2 830 585 utilise un certain nombre d'éléments qui la rendent coûteuse à réaliser et qui nécessitent un volume axial disponible plus important. Par ailleurs, le document EP 803661 décrit un organe de liaison déformable axialement.

L'invention a notamment pour but de limiter ces efforts axiaux indésirables transmis au vilebrequin.

A cet effet, l'invention a pour objet un embrayage, notamment pour véhicule automobile, du type comprenant un volant d'inertie et un organe de liaison destiné à relier le volant d'inertie à un organe menant, l'organe de liaison ayant une forme générale de révolution autour d'un axe de révolution et étant déformable élastiquement axialement, où l'organe de liaison est découpé dans une tôle et comprend des grands secteurs ajourés alternant avec des petits secteurs ajourés d'angles inférieurs à ceux des grands secteurs, chaque grand secteur comprenant au moins des première et deuxième lumières d'assouplissement décalées radialement, chaque petit secteur comprenant au moins une troisième lumière d'assouplissement agencée radicalement par rapport aux première et deuxième lumières d'assouplissement de façon à pouvoir définir un cercle radialement interne passant par les première et troisième lumières d'assouplissement et un cercle radialement externe passant par les deuxième et troisième lumières d'assouplissement.

Cet organe de liaison, très souple axialement, permet de compenser les défauts d'alignement et les dispersions de cotes axiales des différents éléments de l'embrayage de façon à limiter efficacement les efforts axiaux indésirables transmis au vilebrequin, ceci en assurant une transmission de couple suffisante entre l'organe menant et le volant d'inertie.

De manière optionnelle, l'organe de liaison comprend des grands secteurs ajourés alternant avec des petits secteurs ajourés d'angles inférieurs à ceux des grands secteurs, chaque grand secteur comprenant des première et deuxième lumières d'assouplissement décalées radialement, chaque petit secteur comprenant une troisième lumière d'assouplissement agencée radialement par rapport aux première et deuxième lumière d'assouplissement de façon à pouvoir définir un cercle radialement interne passant par les première et troisième lumières d'assouplissement et un cercle radialement externe passant par les deuxième et troisième lumières d'assouplissement.

Les lumières ainsi agencées permettent d'obtenir un excellent compromis entre la souplesse axiale et la raideur en torsion de l'organe de liaison, les contraintes générées dans l'organe de liaison lors de son utilisation étant acceptables par le matériau dans lequel est conçu l'organe de liaison.

Un embrayage selon l'invention peut en outre comporter l'une ou plusieurs des caractéristiques suivantes :
- chaque grand secteur comprend un orifice de passage d'une vis de fixation sur le volant d'inertie, cet orifice de fixation étant radialement externe par rapport aux première et deuxième lumière d'assoupissement :

- chaque petit secteur comprend un orifice de passage d'un doigt de centrage de l'organe de liaison par rapport au volant d'inertie, cet orifice de centrage étant radialement externe par rapport à la troisième lumière d'assouplissement ;
- les première et deuxième lumières d'assouplissement ont chacune une forme générale incurvée autour de l'axe de révolution de l'organe de liaison ;
- les première et seconde lumières forment une surface ajourée qui couvre au moins 80% de la surface totale du grand secteur comportant ces première et seconde lumières, de préférence 90% ;
- la troisième lumière d'assouplissement à une forme générale convergente vers l'axe de révolution de l'organe de liaison;
- chaque grand secteur s'étend suivant un angle qui est au moins trois fois supérieur à l'angle de chaque petit secteur ;
- l'embrayage comporte trois grands secteurs et trois petits secteurs ;
- l'embrayage comprend au moins un organe d'entretoisement local de l'organe de liaison et du volant d'inertie, l'organe d'entretoisement local formant un organe passant, intercalé entre l'organe de liaison et le volant d'inertie, traversé par la vis de fixation d'un grand secteur correspondant ;
- l'organe de liaison est relié au volant d'inertie de façon que l'organe de liaison présente une déformation destinée à être compensée, au moins partiellement, par la déformation générée lorsqu'une butée de commande exerce un effort sur un diaphragme correspondant de l'embrayage ;
- l'embrayage comporte un roulement formant palier, agencé entre un couvercle de l'embrayage et un carter de boîte de vitesses, ce roulement assurant un centrage de l'embrayage par rapport à un axe d'un arbre d'entrée de la boîte de vitesses, le positionnement axial de l'embrayage par rapport au carter de boîte de vitesses, et la solidarisation axiale de cet embrayage sur ce carter de boîte de vitesses ;
- l'organe de liaison a une épaisseur comprise entre 2 et 2,5 mm ;
- l'organe de liaison est en acier, notamment en acier dénommé 50CV4 dans la norme française AFNOR ;
- l'embrayage forme un double embrayage ;

L'invention concerne régalement un embrayage, notamment pour véhicule automobile, du type comprenant un volant d'inertie et un organe de liaison destiné à relier le volant d'inertie à un organe menant, l'organe de liaison ayant une forme générale de révolution autour d'un axe de révolution et étant déformable élastiquement axialement, où l'organe de liaison a une raideur axiale inférieure à 200 N/mm, de préférence inférieure à 150 N/mm, et en particulier comprise entre 50 et 110 N/mm.

L'invention sera mieux comprise à la lecture de la description qui va suivre, donnée uniquement à titre d'exemple et faite en se référant aux dessins annexés dans lesquels :
- la figure 1 est une vue en coupe axiale d'un double embrayage selon l'invention ;
- la figure 2 est une vue de face d'un organe de liaison du double embrayage de la figure 1.

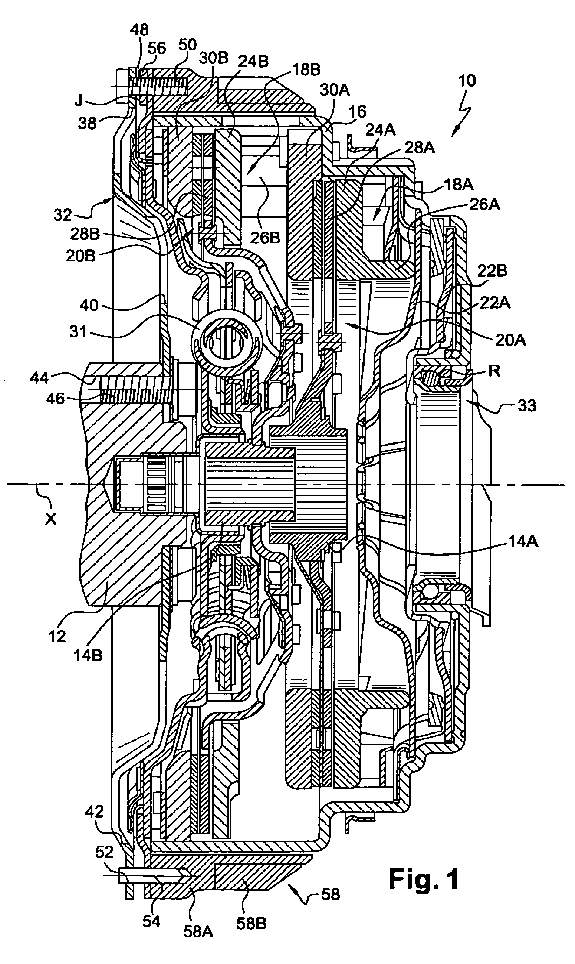

On a représenté sur la figure 1 un double embrayage pour véhicule automobile, désigné par la référence générale 10. Ce double embrayage 10 est destiné à coupler un vilebrequin 12 (organe menant) d'un moteur du véhicule avec des arbres 14A et 14B (organes menés) d'entrée de boîte de vitesses.

Le double embrayage 10 comporte un couvercle 16 dans lequel sont logés des premier et second embrayages de passage de rapports de parités différentes. Ces premier et second embrayages comprennent respectivement des premier 18A et second 18B mécanismes destinés à agir sur des première 20A et seconde 20B frictions.

Les premier 18A et second 18B mécanismes comprennent respectivement des premier 22A et second 22B diaphragmes destinées à coopérer avec des premier 24A et second 24B plateaux pression solidaires en rotation du couvercle 16.

Chacun de ces diaphragmes 22A, 22B coopère avec le plateau de pression 24A, 24B correspondant par l'intermédiaire d'un organe d'entretoisement axial 26A, 26B solidaire du plateau de pression 24A, 24B.

Les première 20A et seconde 20B frictions comprennent respectivement des premier 28A et second 28B disques de friction.

Chaque plateau de pression 24A, 24B est susceptible, lorsqu'il est poussé par le diaphragme 22A, 22B correspondant, d'enserrer le disque de friction 28A, 28B contre un plateau de réaction 30A, 30B solidaire en rotation du couvercle 16.

Les deux disques de friction 28A, 28B sont liés en rotation respectivement aux deux arbres 14A et 14B de boîte de vitesses correspondant à des rapports de vitesse de parités différentes.

On notera que la commande des embrayages se fait au moyen de butées de commande classiques (non représentées) coopérant chacune avec un diaphragmes 22A, 22B correspondant. En général, les butées de commande sont commandées par un actionneur piloté par un calculateur électronique.

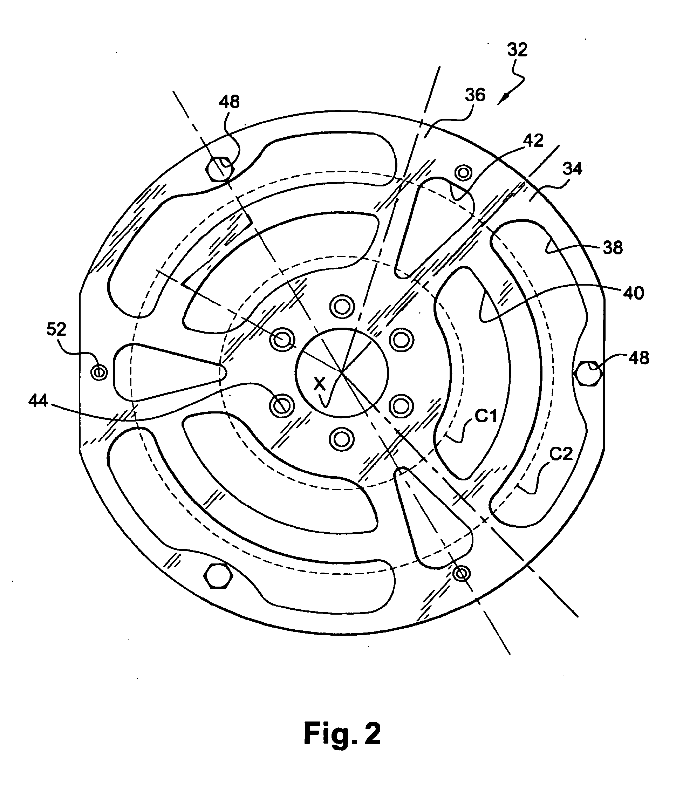

Le double embrayage 10 est lié en rotation, par l'intermédiaire d'un dispositif 31 d'amortissement de vibrations, à un volant d'inertie primaire 58 fixé au vilebrequin. Le volant d'inertie primaire 58 comporte une première couronne 58A, dite couronne massive, sur laquelle est emboîtée une seconde couronne 58B, dite couronne de démarreur. La couronne massive 58A est liée en rotation au vilebrequin 12 au moyen d'un organe de liaison 32 de forme générale de révolution autour d'un axe de révolution X. Cet organe de liaison 32 est représenté plus en détail sur la figure 2.

Afin de compenser les défauts d'alignement et les dispersions de cotes axiales des différents éléments de l'embrayage 10, l'organe de liaison 32 a une raideur axiale inférieure à 110 N/mm. Néanmoins, malgré cette souplesse axiale, l'organe de liaison 32 est susceptible de transmettre des couples importants du vilebrequin 12 au volant d'inertie 58, les contraintes générées dans l'organe de liaison 32 étant acceptables pour le matériau dans lequel est conçu cet organe de liaison 32.

On notera que le double embrayage 10 comporte un roulement R assurant le centrage, le positionnement axial, et la solidarisation axiale s'opposant aux efforts exercés par les butées de commande, du double embrayage 10. Ce roulement R est muni d'une bague externe reliée au couvercle 16 et d'une bague interne retirée à un carter de la boîte de vitesses par l'intermédiaire d'un organe classique 33, par exemple une collerette fixée à la bague interne du roulement R. Le couvercle 16 étant relié axialement au carter de boîte de vitesses, l'organe de liaison 32 ne subit pas d'efforts axiaux indésirables résultant des efforts exercés par les butées de commandes sur les diaphragmes 22A, 22B.

L'organe de liaison 32 comprend des grands secteurs ajourés 34 alternant avec des petits secteurs ajourés 36 d'angles inférieurs à ceux des grands secteurs 34. Dans l'exemple représenté sur la figure 2, l'organe de liaison 32 comporte trois grands secteurs 34, d'angles sensiblement égaux à 95°, et trois petits secteurs 36, d'angles sensiblement égaux à 25°.

Chaque grand secteur 34 comprend des lumières d'assouplissament décalées radialement, dites première 40 et deuxième 38 lumières. Ces première 40 et deuxième 38 lumières d'assouplissement ont chacune une forme générale incurvée autour de l'axe de révolution X de l'organe de liaison 32. En général, la surface ajourée de chaque grand secteur 34, formée par les lumières d'assouplissement, est étendue sur plus de 80% de la surface totale du grand secteur 34, de préférence 90% de cette surface totale.

En variante, chaque grand secteur 34 pourra comporter plus de deux lumières d'assouplissement.

On notera que la périphérie externe du grand secteur est formée par un secteur de matière d'une largeur radiale inférieure à la moitié de la largeur radiale de la première lumière 48.

Chaque petit secteur 36 comprend une lumière d'assouplissement, dite troisième lumière 42, de forme générale convergente vers l'axe de révolution X de l'organe de liaison. Cette troisième lumière 42 est agencée radialement par rapport aux première 40 et deuxième 38 lumières d'assouplissement de façon à pouvoir définir un cercle C1 radialement interne passant par les première 40 et troisième 42 lumières d'assouplissement et un cercle C2 radialement externe passant par les deuxième 38 et troisième 42 lumières d'assouplissement.

Cet agencement des lumières d'assouplissement 38, 40, 42 permet que l'organe de liaison 32 soit à la fois suffisamment souple axialement, de façon que sa raideur axiale soit inférieure à 110 N/mm, et capable de transmettre des couples élevés.

La mesure de cette raideur axiale est effectuée dans les conditions de montage, c'est à dire que l'organe de liaison 32 est lié au vilebrequin 12 et au volant d'inertie 58 avec des éléments de liaison conformes à ceux utilisés lors du montage du double embrayage 10. On mesure alors la charge axiale à appliquer à l'organe de liaison 32 pour un déplacement prédéterminé du volant d'inertie 58 par rapport au vilebrequin 12.

On notera que la valeur de la raideur obtenue pour un organe de liaison selon l'invention est très inférieure à celle d'un volant moteur flexible classique réalisé à partir d'une tôle non ajourée, de raideur sensiblement égale à 10 000N/mm.

En général, l'organe de liaison 32 a une épaisseur comprise entre 2 et 2, 5 millimètres. De préférence, cet organe de liaison 32 est en acier, notamment en acier dénommé 50CV4 dans la norme AFNOR.

Afin de fixer l'organe de liaison 32 au vilebrequin 12, l'organe de liaison 32 est muni, au voisinage de son centre, d'orifices de fixation 44. Des vis 46 sont rapportées dans ces orifices pour la fixation au vilebrequin 12.

L'organe de liaison 32 comporte en outre, dans chacun des grands secteurs 34, un orifice 48 de passage d'une vis 50 de fixation sur le volant d'inertie 58. Cet orifice de fixation 48 est radialement externe par rapport aux première 40 et deuxième 38 lumières d'assouplissement, et est centré sur une médiane du grand secteur 34.

L'organe de liaison 32 comporte aussi, dans chacun des petits secteurs 36, un orifice 52 de passage d'un doigt de centrage 54 de l'organe de liaison par rapport au volant d'inertie 58. Cet orifice de centrage 52 est radialement externe par rapport à la troisième lumière d'assouplissement 42, et diamétralement opposé à l'orifice de fixation 48.

Le double embrayage 10 comporte en outre trois organes d'entretoisement local 56, formés chacun par un organe passant, par exemple une rondelle, intercalé entre l'organe de liaison 32 et le volant d'inertie 58. Cet organe d'entretoisement local 56 est traversé par la vis de fixation 50 du grand secteur 34 correspondant.

En variante, l'entretoisement peut être assuré par un bossage localisé de l'organe de liaison 32 ou d'un organe situé en regard. Cet entretoisement est destiné à laisser un jeu entre l'organe de liaison 32 et l'organe en regard de cet organe de liaison 32 afin de permettre un débattement axial de l'organe de liaison 32.

La figure 1 représente l'organe de liaison 32 dans un état intermédiaire de montage dans lequel, d'une part, le volant d'inertie 58 est relié à la boîte de vitesses et, d'autre part, l'organe de liaison est relié au vilebrequin 12 et au volant d'inertie 58. Toutefois, dans cet état intermédiaire de montage, il existe un jeu axial J entre, d'une part, les organes d'entretoisement 56 et, d'autre part, l'organe de liaison 32 ou le volant d'inertie 58.

Ainsi, lorsque les vis 50 sont ensuite serrées, l'organe de liaison 32 est relié au volant d'inertie 58 en se déformant en direction de la boîte de vitesses de façon à exercer une précontrainte sur ce volant d'inertie 58. Cette déformation de l'organe de liaison 32 s'oppose à la déformation engendrée par l'effort de poussée exercé par les butées de commande sur les premier 22A et second 22B diaphragmes, de manière à ce que ces déformations se compensent sensiblement.

On notera que l'invention n'est pas limitée au mode de réalisation précédemment décrit. En effet, l'homme du métier pourra notamment envisager des variantes de la forme de l'organe de liaison sans sortir pour autant du cadre de l'invention.

Ainsi, les embrayages peuvent être du type ouvert ou fermé. On rappellera qu'un embrayage du type ouvert est un embrayage dont le diaphragme n'exerce pas d'effort de poussée sur le plateau de pression lorsqu'il est au repos, et qu'un embrayage du type fermé est un embrayage dont le diaphragme exerce constamment un effort de poussée sur le plateau de pression lorsqu'il est au repos.

Par ailleurs, les embrayages peuvent être à commande du type tiré ou poussé, l'embrayage double pouvant aussi être de type mixte. On rappellera qu'un embrayage est à commande du type tiré lorsque l'effort exercé par la butée de commande sur le diaphragme est orienté dans le sens du vilebrequin vers la boîte de vitesses, et qu'un embrayage est à commande du type poussé lorsque l'effort exercé par la butée de commande sur le diaphragme est orienté dans le sens de la boîte de vitesses vers le vilebrequin.

Enfin, l'invention pourra également être appliquée à un embrayage comportant un volant d'inertie du type simple ou double.

## Revendications

1. Embrayage (10), notamment pour véhicule automobile, du type comprenant un volant d'inertie (58) et un organe de liaison (32) destiné à relier le volant d'inertie (58) à un organe menant (12), l'organe de liaison (32) ayant une forme générale de révolution autour d'un axe de révolution (X) et étant déformable élastiquement axialement, **caractérisé en ce que** l'organe de liaison (32) est découpé dans une tôle et comprend des grands secteurs (34) ajourés alternant avec des petits secteurs (36) ajourés d'angles inférieurs à ceux des grands secteurs (34), chaque grand secteur (34) comprenant au moins des première (40) et deuxième (38) lumières d'assouplissement décalées radialement, chaque petit secteur (36) comprenant au moins une troisième lumière d'assouplissement (42) agencée radialement par rapport aux première (40) et deuxième (38) lumières d'assouplissement de façon à pouvoir définir un cercle (C1) radialement interne passant par les première (40) et troisième (42) lumières d'assouplissement et un cercle (C2) radialement externe passant par les deuxième (38) et troisième (42) lumières d'assouplissement.

2. Embrayage (10) selon la revendication 1, **caractérisé en ce que** chaque grand secteur (34) comprend un orifice (48) de passage d'une vis de fixation (50) sur le volant d'inertie (58), cet orifice de fixation (48) étant radialement externe par rapport aux première (40) et deuxième (38) lumières d'assouplissement.

3. Embrayage (10) selon la revendication 1 ou 2, **caractérisé en ce que** chaque petit secteur (36) comprend un orifice (52) de passage d'un doigt (54) de centrage de l'organe de liaison (32) par rapport au volant d'inertie (58), cet orifice de centrage (52) étant radialement externe par rapport à la troisième lumière d'assouplissement (42).

4. Embrayage (10) selon l'une quelconque des revendications précédentes, **caractérisé en ce que** les première (40) et deuxième (38) lumières d'assouplissement ont chacune une forme générale incurvée autour de l'axe de révolution (X) de l'organe de liaison (32).

5. Embrayage (10) selon l'une quelconque des revendications précédentes, **caractérisé en ce que** les première (40) et seconde (38) lumières forment une surface ajourée qui couvre au moins 80% de la surface totale du grand secteur (34) comportant ces première (40) et seconde (38) lumières, de préférence 90%.

6. Embrayage (10) selon l'une quelconque des revendications précédentes, **caractérisé en ce que** la troisième lumière d'assouplissement (42) à une forme générale convergente vers l'axe de révolution (X) de l'organe de liaison (32).

7. Embrayage (10) selon l'une quelconque des revendications précédentes, **caractérisé en ce que** chaque grand secteur (34) s'étend suivant un angle qui est au moins trois fois supérieur à l'angle de chaque petit secteur (36).

8. Embrayage (10) selon l'une quelconque des revendications précédentes, **caractérisé en ce qu'**il comporte trois grands secteurs (34) et trois petits secteurs (36).

9. Embrayage (10) selon l'une quelconque des revendications précédentes, **caractérisé en ce qu'**il comprend au moins un organe (56) d'entretoisement local de l'organe de liaison (32) et du volant d'inertie (58), l'organe (56) d'entretoisement local formant un organe passant, intercalé entre l'organe de liaison (32) et le volant d'inertie (58), traversé par la vis de fixation (50) d'un grand secteur (34) correspondant.

10. Embrayage (10) selon l'une quelconque des revendications précédentes, **caractérisé en ce que** l'organe de liaison (32) est relié au volant d'inertie (58) de façon que l'organe de liaison présente une déformation destinée à être compensée, au moins partiellement, par une déformation générée lorsqu'une butée de commande exerce un effort sur un diaphragme (22A, 22B) correspondant de l'embrayage (10).

11. Embrayage (10) selon l'une quelconque des revendications précédentes, **caractérisé en ce qu'**il comporte un roulement (R) formant palier, agencé entre un couvercle (16) de l'embrayage (10) et un carter de boîte de vitesses, ce roulement (R) assurant :
- un centrage de l'embrayage (10) par rapport à un axe d'un arbre d'entrée de la boîte de vitesses,
- le positionnement axial de l'embrayage par rapport au carter de boîte de vitesses, et
- la solidarisation axiale de cet embrayage sur ce carter de boîte de vitesses.

12. Embrayage (10) selon l'une quelconque des revendications précédentes, **caractérisé en ce que** l'organe de liaison (32) a une épaisseur comprise entre 2 et 2,5 mm.

13. Embrayage (10) l'une quelconque des revendications précédentes, **caractérisé en ce que** l'organe de liaison (32) est en acier, notamment en acier dénommé 50CV4 dans la norme française AFNQR.

14. Embrayage (10) selon l'une quelconque des revendications précédentes, **caractérisé en ce qu'**il forme un double embrayage.

## Claims

1. Clutch (10), in particular for a motor vehicle, of the type comprising an inertia flywheel (38) and a connection unit (32) which is designed to connect the inertia flywheel (58) to a driving unit (12), the connection unit (32) having a general form of revolution around an axis of revolution (X), and being axially resiliently deformable, **characterised in that** the connection unit (32) is cut out of a metal plate, and comprises large perforated segments (34) which alternate with small perforated segments (36) with angles which are smaller than those of the large segments (34), each large segment (34) comprising at least first (40) and second (38) flexibilising openings which are offset radially, each small segment (36) comprising at least one third flexibilising opening (42) which is arranged radially relative to the first (40) and second (38) flexibilising openings, such as to be able to define a radially inner circle (C1) which passes via the first (40) and third (42) flexibilising openings, and a radially outer circle (C2), which passes via the second (38) and third (42) flexibilising openings.

2. Clutch (10) according to claim 1, **characterised in that** each large segment (34) comprises an aperture (48) for passage of a securing scrow (50) on the inertia flywheel (58), this securing aperture (48) being radially outer relative to the first (40) and second (38) flexibilising openings.

3. Clutch (10) according to claim 1 or claim 2, **characterised in that** each small segment (36) comprises an aperture (52) for passage of a finger (54) for centring of the connection unit (32) relative to the inertia flywheel (58), this centring aperture (52) being radially outer relative to the third flexibilising opening (42).

4. Clutch (10) according to any one of the preceding claims, **characterised in that** the first (40) and second (38) flexibilising openings each have a form which is generally curved around the axis of revolution (X) of the connection unit (32).

5. Clutch (10) according to any one of the preceding claims, **characterised in that** the first (40) and second (38) openings form a perforated surface which covers at least 80% of the total surface area of the large segment (34) comprising these first (40) and second (38) openings, and preferably 90%.

6. Clutch (10) according to any of the preceding claims, **characterised in that** the third flexibilising opening (42) has a form which generally converges towards the axis of revolution (X) of the connection unit (32).

7. Clutch (10) according to any one of the preceding claims, **characterised in that** each large segment (34) extends according to an angle which is at least three times larger than the angle of each small segment (36).

8. Clutch (10) according to any one of the preceding claims, **characterised in that** it comprises three large segments (34) and three small segments (36).

9. Clutch (10) according to any one of the preceding claims, **characterised in that** it comprises at least one unit (56) for local bracing of the connection unit (32) and the inertia flywheel (58), the unit (56) for local bracing forming a through unit, which is interposed between the connection unit (32) and the inertia flywheel (58), through which there passes the securing screw (50) of a corresponding large segment (34).

10. Clutch (10) according to any one of the preceding claims, **characterised in that** the connection unit (32) is connected to the inertia flywheel (58) such that the connection unit has deformation which is designed to be compensated for, at least partially, by deformation which is generated when a control stop exerts a force on a corresponding diaphragm (22A, 22B) of the clutch (10).

11. Clutch (10) according to any one of the preceding claims, **characterised in that** it comprises a roller bearing (R) which forms a bearing, arranged between a cover (16) of the clutch (10) and a gearbox housing, this roller bearing (R) assuring:
- centring of the clutch (10) relative to an axis of an intake shaft of the gearbox;
- the axial positioning of the clutch relative to the gearbox housing; and
- the axial rendering integral of this clutch on this gearbox housing.

12. Clutch (10) according to any one of the preceding claims, **characterised in that** the connection unit (32) has a thickness of between 2 and 2.5 mm.

13. Clutch (10) according to any one of the preceding claims, **characterised in that** the connection unit (32) is made of steel, and in particular of steel known as 50CV4 according to the AFNOR French standard.

14. Clutch (10) according to any one of the preceding claims, **characterised in that** it forms a double clutch.

## Patentansprüche

1. Kupplung (10) insbesondere für Kraftfahrzeuge, umfassend ein Schwungrad (58) und ein Verbindungsorgan (32), das dazu bestimmt ist, das Schwungrad (58) mit einem Antriebsorgan (12) zu verbinden, wobei das Verbindungsorgan (32) eine um eine Drehachse (X) umlaufende Gesamtform hat und axial elastisch veformbar ist, **dadurch gekennzeichnet, dass** das Verbindungsorgan (32) aus einem Blech ausgestanzt ist und große durchbrochene Sektoren (34) umfasst, welche sich abwechseln mit kleinen durchbrochenen Sektoren (36), deren Winkel kleiner sind als die der großen Sektoren (34), wobei jeder große Sektor (34) zumindest erste (40) und zweite (38) radial versetzte Nachgiebigkeitsöffnungen aufweist, wobei jeder kleine Sektor (36) zumindest eine dritte Nachgiebigkeitsöffnung (42) umfasst, welche relativ zu den ersten (40) und zweiten (38) Nachgiebigkeitsöffnungen radial derart angeordnet ist, dass ein radial innerer Kreis (C1), welcher durch die ersten (40) und dritten (42) Nachgiebigkeitsöffnungen hindurchgeht, und ein radial äußerer Kreis (C2), welcher durch die zweiten (38) und dritten (42) Nachgiebigkeitsöffnungen hindurchgeht, definiert werden kann.

2. Kupplung (10) nach Anspruch 1, **dadurch gekennzeichnet, dass** jeder große Sektor (34) ein Loch (48) zum Durchgang einer Schraube (50) zur Befestigung am Schwungrad (58) umfasst, wobei dieses Befestigungsloch (48) bezogen auf die ersten (40) und zweiten (38) Nachgiebigkeitsöffnungen radial außen angeordnet ist.

3. Kupplung (10) nach Anspruch 1 oder 2, **dadurch gekennzeichnet, dass** jeder kleine Sektor (36) ein Loch (52) für den Durchgang eines Stifts (54) zur Zentrierung des Verbindungsorgans (32) relativ zum Schwungrad (58) umfasst, wobei dieses Zentrierungsloch (52) im Verhältnis zu der dritten Nachgiebigkeitsöffnung (42) radial außen angeordnet ist.

4. Kupplung (10) nach einem der vorherigen Ansprüche, **dadurch gekennzeichnet, dass** die ersten (40) und zweiten (38) Nachgiebigkeitsöffnungen jeweils eine um die Drehachse (X) des Verbindungsorgans (32) gekrümmte Gesamtform haben.

5. Kupplung (10) nach einem der vorherigen Ansprüche, **dadurch gekennzeichnet, dass** die ersten (40) und zweiten (38) Öffnungen eine durchbrochene Fläche bilden, welche mindestens 80%, vorzugsweise 90% der Gesamtfläche des großen Sektors (34), welcher die ersten (40) und zweiten (38) Öffnungen umfasst, abdeckt.

6. Kupplung (10) nach einem der vorherigen Ansprüche, **dadurch gekennzeichnet, dass** die dritte Nachgiebigkeitsöffnung (42) eine zur Drehachse (X) des Verbindungsorgans (32) konvergierende Gesamtform hat.

7. Kupplung (10) nach einem der vorherigen Ansprüche, **dadurch gekennzeichnet, dass** jeder große Sektor (34) sich über einen Winkel erstreckt, der zumindest dreimal größer als der Winkel jedes kleinen Sektors (36) ist.

8. Kupplung (10) nach einem der vorherigen Ansprüche, **dadurch gekennzeichnet, dass** sie drei große Sektoren (34) und drei kleine Sektoren (36) umfasst.

9. Kupplung (10) nach einem der vorherigen Ansprüche, **dadurch gekennzeichnet, dass** sie mindestens ein Organ (56) zum örtlichen Beabstanden des Verbindungsorgans (32) und des Schwungrads (58) umfasst, wobei das Organ (56) zum örtlichen Beabstanden ein Durchlassorgan bildet, welches zwischen dem Verbindungsorgan (32) und dem Schwungrad (58) eingeschoben ist und durch die Befestigungsschraube (50) eines entsprechenden großen Sektors (34) durchquert wird.

10. Kupplung (10) nach einem der vorherigen Anspruche, **dadurch gekennzeichnet, dass** das Verbindungsorgan (32) mit dem Schwungrad (58) derart verbunden ist, dass das Verbindungsorgan eine Verformung aufweist, welche dazu bestimmt ist, zumindest teilweise durch eine Verformung kompensiert zu werden, welche hervorgerufen wird, wenn ein Betätigungslager eine Kraft auf eine entsprechende Membranfeder (22A, 228) der Kupplung (10) ausübt.

11. Kupplung (10) nach einem der vorherigen Ansprüche, **dadurch gekennzeichnet, dass** sie ein lagerbildendes Rollorgan (R) umfasst, welches zwischen einem Deckel (16) der Kupplung (10) und einem Getriebegehäuse angeordnet ist, wobei dieses RoBelement (R) sicherstellt:
- eine Zentrierung der Kupplung (10) relativ zu einer Eingangswelle des Getriebes,
- die axiale Positionierung der Kupplung relativ zum Getriebegehäuse, und
- die axiale Befestigung dieser Kupplung an diesem Getriebegehäuse.

12. Kupplung (10) nach einem der vorherigen Ansprüche, **dadurch gekennzeichnet, dass** das Verbindungsorgan (32) eine Dicke hat, die zwischen 2 und 2,5 mm liegt.

13. Kupplung (10) nach einem der vorherigen Ansprüche, **dadurch gekennzeichnet, dass** das Verbindungsorgan (32) aus Stahl, insbesondere aus dem in der französischen Norm AFNOR als 50CV4 bezeichneten Stahl besteht.

14. Kupplung (10) nach einem der vorherigen Ansprüche, **dadurch gekennzeichnet, dass** sie eine Doppelkupplung bildet.
